# EUROPEAN PATENT APPLICATION

(11) **EP 4 851 732 A1**
(43) Date of publication of application: **09.12.2026**
(21) Application number: 26181855.3
(22) Date of filing: 29.05.2026
(51) Int. Cl.: G05B 13/04, G05B 17/02

(54) **APPARATUS, METHOD, AND PROGRAM FOR SUPPORTING CONTROL OF EQUIPMENT**

(30) Priority: 30.05.2025 JP 2025091336
(71) Applicant: Yokogawa Electric Corporation, Tokyo 180-8750 (JP)
(72) Inventor: TAKENAKA, Azusa, Musashinoshi, Tokyo, 180-8750 (JP); KANDA, Takenori, Musashinoshi, Tokyo, 180-8750 (JP); UEMURA, Hideo, Musashinoshi, Tokyo, 180-8750 (JP); SATOGATA, Risa, Musashinoshi, Tokyo, 180-8750 (JP); WANG, Zhexing, Musashinoshi, Tokyo, 180-8750 (JP)
(74) Representative: Hoffmann Eitle

(57) **Abstract**

Provided is an apparatus comprising a processor, the processor performing: designating a constant parameter to be adjusted, from among a plurality of constant parameters used in a prediction model which predicts a state of a process in response to input of process data; and determining a value of the constant parameter to be adjusted, such that an error between the state of the process predicted using the prediction model and an actual state of the process is within a reference range, wherein in the designating, each of the plurality of constant parameters is sequentially designated as the constant parameter to be adjusted. Representative Figure:

## Description

### BACKGROUND

### 1. TECHNICAL FIELD

The present invention relates to an apparatus, a method, and a program.

### 2. RELATED ART

Patent Document 1 describes that " a control parameter of a control apparatus for controlling a plant is optimized" (Claim 1).

### Related Art Document

### Patent Document

Patent Document 1: Japanese Patent Application Publication No. 2021-135871

### SUMMARY

(1)
   In a first aspect of the present invention, there is provided an apparatus comprising a processor, the processor performing: designating a constant parameter to be adjusted, from among a plurality of constant parameters used in a prediction model which predicts a state of a process in response to input of process data; and determining a value of the constant parameter to be adjusted, such that an error between the state of the process predicted using the prediction model and an actual state of the process is within a reference range.
(2)
   In the apparatus of (1) described above, in the designating, each of the plurality of constant parameters may be sequentially designated as the constant parameter to be adjusted.
(3)
   In the apparatus of (2) described above, the prediction model may include a plurality of variable parameters, the processor may further perform first acquiring, for each of the plurality of variable parameters included in the prediction model, a rank of a degree of influence on the state of the process predicted by the prediction model, and in the designating, each of the plurality of constant parameters may be designated in descending order of the rank of the degree of influence of a variable parameter on which an arithmetic operation is performed with the constant parameter. A degree of influence of a variable parameter on a predicted state may be an amount of change in a predicted state predicted by the prediction model with respect to an amount of change in the variable parameter, and may be a sensitivity of a predicted state predicted by the prediction model to a change in a variable parameter. In the first acquiring, a degree of influence may be calculated for each of the plurality of variable parameters, and a rank may be identified based on a calculated degree of influence. **In** the first acquiring, each of the plurality of variable parameters included in the prediction model may be sequentially changed by a reference amount, to acquire, for each of the plurality of variable parameters, an amount of change in a predicted state output from the prediction model, and a degree of influence for each variable parameter may be calculated by dividing an amount of change in a predicted state by a reference amount.
(4)
   In the apparatus according to any one of (1) to (3) described above, the prediction model may include a variable parameter, and the processor may further perform: second acquiring process data; and predicting a state of a process by the prediction model based on a value of a variable parameter included in acquired process data.
(5)
   In the apparatus of (4) described above, the prediction model may include a plurality of variable parameters, and the processor may further perform: first acquiring, for each of the plurality of variable parameters included in the prediction model, a rank of a degree of influence on the state of the process predicted by the prediction model; and setting a frequency of acquisition by the second acquiring for a variable parameter having a higher rank of a degree of influence among the plurality of variable parameters, to be higher than a frequency of acquisition by the second acquiring for a variable parameter having a lower rank of a degree of influence.
(6)
   In the apparatus of (4) or (5) described above, in the second acquiring, a state value indicating an actual state for the state of the process predicted by the predicting may be further acquired, and in the determining, a value of the constant parameter to be adjusted may be determined such that an error between the state value acquired by the second acquiring and a state value indicating the state of the process predicted by the predicting is within a reference range.
(7)
   In the apparatus of (6) described above, in the determining, the value of the constant parameter to be adjusted may be adjusted by a reference width each time until the error between the state value acquired by the second acquiring and the state value indicating the state of the process predicted by the predicting falls within the reference range. The reference width may be common regardless of a constant parameter, or may be different for each constant parameter. When the reference width is different for each constant parameter, the reference width may be set in accordance with a degree of influence of a variable parameter on which an arithmetic operation is performed with the constant parameter in the prediction model. For example, the reference width may be set to be larger as a degree of influence of a variable parameter is higher, and the reference width may be set to be smaller as a degree of influence is lower. Instead of this, the reference width may be set to be smaller as a degree of influence of a variable parameter is higher, and the reference width may be set to be larger as a degree of influence is lower.
(8)
   In the apparatus of (7) described above, the prediction model may include a plurality of variable parameters, and the processor may further perform setting by resetting, each time the constant parameter to be adjusted is adjusted, a frequency of acquisition by the second acquiring for a variable parameter on which an arithmetic operation is performed with the constant parameter among the plurality of variable parameters.
(9)
   In the apparatus of (4) to (8) described above, the variable parameter may be either a measurement parameter corresponding to a measured value in a process or a control parameter corresponding to a control value for a process.
(10)
   In the apparatus of (9) described above, the processor may further perform controlling a process based on a predetermined reference condition for a measurement parameter as the variable parameter in order to maintain the state of the process predicted using the prediction model within an allowable range.
(11)
   In a second aspect of the present invention, there is provided a method comprising: designating a constant parameter to be adjusted, from among a plurality of constant parameters used in a prediction model which predicts a state of a process in response to input of process data; and determining a value of the constant parameter to be adjusted, such that an error between the state of the process predicted using the prediction model and an actual state of the process is within a reference range.
(12)
   In a third aspect of the present invention, there is provided a program that, when executed by a computer, causes the computer to perform operations comprising: designating a constant parameter to be adjusted, from among a plurality of constant parameters used in a prediction model which predicts a state of a process in response to input of process data; and determining a value of the constant parameter to be adjusted, such that an error between the state of the process predicted using the prediction model and an actual state of the process is within a reference range.

It should be noted that the above summary clause does not necessarily describe all necessary features of the embodiments of the present invention. In addition, the present invention may also be a sub-combination of the features described above.

### BRIEF DESCRIPTION OF THE DRAWINGS

Fig. 1 shows a system 1 according to an embodiment.
Fig. 2 shows operation of a control support apparatus 3.
Fig. 3 shows another operation of the control support apparatus 3.
Fig. 4 shows another operation of the control support apparatus 3.
Fig. 5 shows an example of a computer 1200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to a solution of the invention.

### (Configuration of System 1)

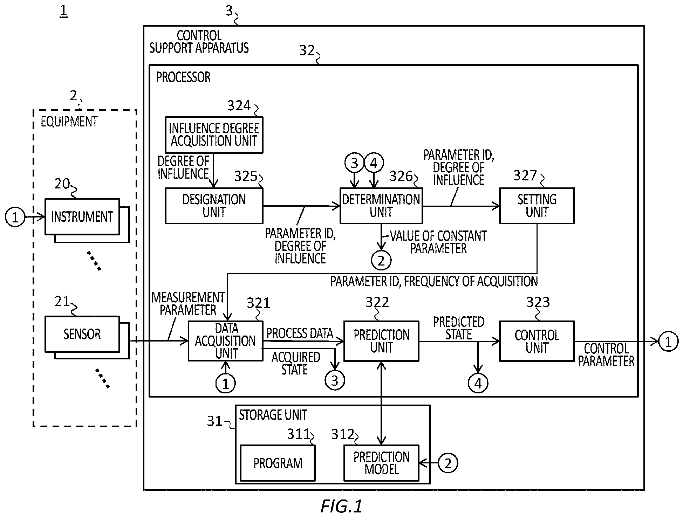

FIG. 1 shows a system 1 according to the present embodiment. The system 1 includes equipment 2 and a control support apparatus 3.

### ((Equipment 2))

Equipment 2 is equipped with a plurality of instruments 20. For example, the equipment 2 may be a plant, or may be a combined apparatus constituted by combining a plurality of instruments 20. Examples of the plant include, in addition to an industrial plant such as a chemical or biotechnology-related plant (for example, an industrial plant that performs distillation): a plant that manages and controls a wellhead of a gas field, an oil field, or the like, or its surroundings; a plant that manages and controls power generation such as hydraulic, thermal, or nuclear power generation; a plant that manages and controls energy harvesting such as solar or wind power generation, and a plant that manages and controls water supply and sewerage systems, a dam, or the like. In the present embodiment, for example, the equipment 2 has one or more instruments 20 and one or more sensors 21.

### (((Instrument 20)))

Each instrument 20 is a fixture, a machine, or an apparatus, and may be an actuator such as a valve, a pump, a heater, a fan, a motor, a switch for controlling at least one physical amount such as a pressure, a temperature, a pH, a speed or flow rate in a process of the equipment 2, for example. However, the instrument 20 is not limited thereto, and may be, for example, a controller that controls an actuator. According to the present embodiment, for example, the equipment 2 is provided with a plurality of instruments 20. Each instrument 20 may be of different types from each other, or at least some (two or more) of the instruments 20 may be of the same type. Examples of the process include: a reaction process in an industrial plant such as a chemical or biotechnology-related plant; a distillation process; a power generation process using a gas turbine or a steam turbine in a power generation plant such as a hydroelectric, thermal, or nuclear power generation plant; a power generation process using a wind turbine or a power conditioner in an energy harvesting plant such as a solar or wind power generation plant; and a gas absorption process for separating components in a gas by gas absorption. The reaction process may be a process for performing a catalytic reaction, and for example, it may be a process for producing hydrogen by performing a steam reforming reaction of methane. The gas absorption process may be a process for removing impurities or the like in a gas by incorporating them into a liquid, and for example, it may be a process for incorporating impurities into a liquid by supplying a gas from a lower portion of the gas absorption tower and supplying an absorption liquid from an upper portion thereof to bring them into contact with each other. The absorption liquid that has incorporated impurities may be heated in regeneration or the like to release the impurities, and thereafter returned to the gas absorption tower to be reused.

Each instrument 20 may be controlled by a wired communication or wireless communication from outside via a network (not shown) or may be controlled manually. At least some instruments 20 of the plurality of instruments 20 may be controlled by the control support apparatus 3.

### (((Sensor 21)))

Each sensor 21 measures a state of a process executed in the equipment 2. The state of the process may be, for example, a pressure, a flow rate, a temperature, pH, a speed, power consumption, a concentration of a component in a fluid, a size of a particle in a fluid, or a duration of the process inside the equipment 2, or may be a state indicating a process variable. For example, the measured state of the process may be a concentration of unreacted material at the reactor outlet in a reaction process using a catalyst, and for example, it may be an unreacted methane concentration in a steam reforming reaction process of methane.

The state of the process may be a quality of a product (for example, a purity, a concentration, a composition, a viscosity, a color, or the like), or may be a state regarding operating performance of the equipment 2, such as a production volume per unit time, a production cost, a yield, consumption of energy or raw materials, or emissions of greenhouse gases. The state of the process may be a temperature, humidity, sunshine, a wind direction, a wind volume, a precipitation, or the like of an external environment of the equipment 2 in which the process is executed. Each sensor 21 may supply, to the control support apparatus 3, the state data obtained by measurement.

### ((Control support apparatus 3))

The control support apparatus 3 is an example of an apparatus, and supports control of the equipment 2. The control support apparatus 3 may be implemented by a computer such as a personal computer (PC), a tablet-type computer, a smartphone, a workstation, a server computer, or a general-purpose computer, or may be implemented by a computer system in which a plurality of computers are connected to each other. In addition, the control support apparatus 3 may be implemented by one or more virtual computer environments executable in the computer. Instead of this, the control support apparatus 3 may be a dedicated computer designed for the above applications, or may be dedicated hardware realized by a dedicated circuit. The control support apparatus 3 includes a storage unit 31 and a processor 32.

### ((Storage unit 31))

The storage unit 31 stores various types of information. The storage unit 31 according to the present embodiment may store a program 311 and one or more prediction models 312.

### (((Program 311)))

The program 311 causes the processor 32 to perform various types of processing by being executed by the processor 32. The processing performed by the processor 32 will be described in detail later.

### (((Prediction model 312)))

Each prediction model 312 predicts a state of a process in response to input of process data. Each prediction model 312 may output, in response to process data being input, a state of a process predicted from the process data (also referred to as a predicted state predicted by the prediction model 312). Each prediction model 312 may predict a state of a process at a time point after a time point at which the input process data are acquired. For example, the prediction model 312 may predict a state of a process at a time point later than, by a reference time (for example, 10 hours), the time point at which the process data are acquired.

Here, the process data may include at least one of a measurement parameter corresponding to a measured value in the process or a control parameter corresponding to a control value for the process. The measured value may be a value measured by the sensor 21. The measurement parameter corresponding to the measured value may be the measured value itself, or may be a value calculated by performing a predetermined arithmetic operation on one or more measured values. The control value may be an indicated value for the manipulated variable of the instrument 20, or may be a target value (also referred to as a set value). For example, when the instrument 20 is a valve that supplies a fluid component, the control value may be a concentration of the component in a fluid. The control parameter corresponding to the control value may be the control value itself, or may be a value calculated by performing a predetermined arithmetic operation on the measured value.

The predicted state predicted by the prediction model 312 may be indicated by the numerical value. The predicted state may be a value measurable in the process, and in the present embodiment, for example, it may be a state also indicated by the measurement parameter. For example, the measured and predicted state of the process may be a concentration of unreacted material at the reactor outlet in a reaction process using a catalyst, and may indicate the presence or absence of an abnormality (for example, an abnormality that adversely affects a downstream process) as well as indicating a degree of degradation of the catalyst. When the state of the process is measured and predicted, it is possible to create or change a future operation plan based on a predicted state while confirming the presence or absence of an abnormality based on a measured state. It should be noted that, when prediction accuracy of the prediction model 312 is not high, a value of the predicted state (also referred to as a predicted state value) does not necessarily have to match an actual value acquired as the measurement parameter (also referred to as an acquired state value). The acquired state value will be described in detail later.

Each prediction model 312 may be a mathematical expression model that shows, with a mathematical expression, a relationship between a plurality of parameters in the process. For example, the prediction model 312 may be a physical model showing, with a mathematical expression, physical behavior occurring in the process, or may be a statistical model acquired by statistical processing of parameter values.

A plurality of constant parameters may be used in each prediction model 312. The constant parameter may be, for example, a coefficient (also referred to as a proportionality constant), may be an exponent (also referred to as a power exponent), may be a radix with respect to an exponent, or may be a base or an argument of a logarithm.

Each prediction model 312, which is a mathematical expression model, may include one or more variable parameters. Each variable parameter may be either a measurement parameter corresponding to a measured value in the process or a control parameter corresponding to a control value for the process. Each variable parameter may have an arithmetic operation performed thereon with one or more constant parameters in the prediction model 312, and in calculation of the mathematical expression model as the prediction model 312, it may have an arithmetic operation performed thereon with one or more constant parameters before having an arithmetic operation performed thereon with another variable parameter. An arithmetic operation between the variable parameter and the constant parameter may be an arithmetic operation different from addition and subtraction. For example, a variable parameter P on which an arithmetic operation is performed with a constant parameter K as a proportionality coefficient may be included in the mathematical expression model in a form of K × P. The variable parameter P as a radix on which an arithmetic operation is performed with the constant parameter K as the exponent may be included in the mathematical expression model in a form of P^{K}. Conversely, the variable parameter P as an exponent on which an arithmetic operation is performed with the constant parameter K as a radix may be included in the mathematical expression model in a form of K^{P}. The variable parameter P as an argument on which an arithmetic operation is performed with the constant parameter K as a base of the logarithm may be included in the mathematical expression model in a form of log_{K}P. The variable parameter P as a base on which an arithmetic operation is performed with the constant parameter K as an argument of the logarithm may be included in the mathematical expression model in a form of log_{P}K.

It should be noted that at least one prediction model 312 stored in the storage unit 31 may output, in response to input of process data including a measurement parameter, a state of a process indicating the operating performance of the equipment 2 (for example, a production volume per unit time). Such a prediction model 312 is also referred to as the prediction model 312 for predicting degradation because it indicates how much the operating performance of the equipment 2 degrades depending on a value of the measurement parameter.

### ((Processor 32))

The processor 32 performs various types of processing by executing the program 311. The processor 32 may realize functional units which perform various types of processing by executing the program 311. The processor 32 according to the present embodiment may realize a data acquisition unit 321, a prediction unit 322, a control unit 323, an influence degree acquisition unit 324, a designation unit 325, a determination unit 326, and a setting unit 327.

### (((Data acquisition unit 321)))

The data acquisition unit 321 acquires process data. The data acquisition unit 321 may acquire process data regarding a process performed in the equipment 2. **In** the present embodiment, for example, the data acquisition unit 321 may acquire, from the sensor 21, a measurement parameter corresponding to a measured value in the process among the process data, and may acquire, from the control unit 323, a control parameter corresponding to a control value for the process.

The data acquisition unit 321 may further acquire, for a state of a process predicted by the prediction unit 322, which will be described later, a state value indicating an actual state (also referred to as an acquired state value). The acquired state value may be an actual value of a measurement parameter corresponding to a predicted state predicted by the prediction model 312, or may be a value of a measurement parameter corresponding to a value measured by the sensor 21 for a predicted state predicted by the prediction model 312. The acquired state value may be or may not be included in the process data.

The data acquisition unit 321 may supply the acquired process data to the prediction unit 322. The data acquisition unit 321 may supply, to the determination unit 326, the acquired state value indicating an actual state of the process.

### (((Prediction unit 322)))

The prediction unit 322 predicts a state of a process based on a value of a variable parameter included in process data acquired by the data acquisition unit 321. The prediction unit 322 may predict the state of the process by each prediction model 312. The prediction unit 322 may regard, as the predicted state of the process, a predicted state predicted by the prediction model 312, which is output by supplying a variable parameter included in the process data to the prediction model 312. The prediction unit 322 may supply the predicted state to the control unit 323 and the determination unit 326.

### (((Control unit 323)))

The control unit 323 controls a process.

The control unit 323 may control the process by using a predicted state acquired by the prediction unit 322, and may control the process with a control content that is based on the predicted state. The control content may be input from a user, or may be input from a control model of the process. The control model of the process may output a recommended control content to the control unit 323 in response to input of a state of the process from the control unit 323. The control model may be trained in advance using training data including the state of the process and the control content, and may be stored in the storage unit 31.

**In** addition to this, or instead of this, the control unit 323 may control the process by using an actual state acquired by the data acquisition unit 321, and may control the process with a control content that is based on the acquired state. The control content may be input from a user, or may be input from a control model of the process. When controlling the process by using the actual state, the control unit 323 may control the process based on a predetermined reference condition for a measurement parameter as a variable parameter in order to maintain the predicted state within an allowable range. In the present embodiment, for example, the control unit 323 may control the process based on predetermined reference conditions for the measurement parameter as the variable parameter of the prediction model 312 in order to maintain, within an allowable range, a predicted state predicted by the prediction model 312 for predicting degradation of operating performance. The control unit 323 may control the process such that the measurement parameter as the variable parameter satisfies the reference condition.

Here, the allowable range of the predicted state may be arbitrarily set from a viewpoint of preventing degradation of the operating performance of the equipment 2, and may have, as a boundary value of the predicted state, a threshold value as to whether or not the operating performance of the equipment 2 can degrade. As a result, when the predicted state is within the allowable range, degradation of the operating performance of the equipment 2 is prevented, and when the predicted state is outside the allowable range, the operating performance of the equipment 2 can degrade. A reference condition of a measurement parameter may be a condition that the measurement parameter should satisfy in order to maintain the predicted state within the allowable range, and may be a numerical range of the measurement parameter. As a result, when the process is controlled such that the measurement parameter satisfies the reference condition, the predicted state of the process is maintained within the allowable range, and degradation of the operating performance of the equipment 2 is prevented.

When performing both control of the process using the predicted state and control of the process using the measurement parameter, the control unit 323 may perform these controls by selectively switching between them. For example, the control unit 323 may perform the control of the process using the measurement parameter during a preset first period, and may perform the control of the process using the predicted state during a preset second period. The control unit 323 may switch, based on a user operation, between the control of the process using the measurement parameter and the control of the process using the predicted state. For example, the control of the process using the measurement parameter may be performed during normal operation of the equipment 2, and the control of the process using the predicted state may be performed during a reference period before maintenance of the equipment 2 (for example, a period of one month before the maintenance).

The control unit 323 may control the process by supplying a control parameter to the instrument 20. For example, when a reaction process is performed in the equipment 2, the control unit 323 may supply a control parameter regarding an operating condition of a reactor (for example, operating temperature and pressure) to the instrument 20. For example, when a gas absorption process for removing impurities in a gas is performed in the equipment 2, the control unit 323 may supply, to the instrument 20, control parameters regarding an amount of an absorption liquid supplied to a gas absorption tower and an amount of the absorption liquid, which has incorporated the impurities, discharged from the gas absorption tower. The control unit 323 may also supply the control parameter to the data acquisition unit 321.

### (((Influence degree acquisition unit 324)))

The influence degree acquisition unit 324 acquires, for each of a plurality of variable parameters included in the prediction model 312, a rank of a degree of influence on a predicted state predicted by the prediction model 312. The degree of influence of a variable parameter on the predicted state predicted by the prediction model 312 may be an amount of change in the predicted state predicted by the prediction model 312 with respect to an amount of change in the variable parameter, or in other words, may be a sensitivity of the predicted state predicted by the prediction model 312 to a change in the variable parameter.

The influence degree acquisition unit 324 may calculate the degree of influence for each of the plurality of variable parameters, and may identify the rank based on the calculated degree of influence. For example, the influence degree acquisition unit 324 may sequentially change, by a reference amount, each of the plurality of variable parameters included in the prediction model 312, to acquire, for each of the plurality of variable parameters, the amount of change in the predicted state output from the prediction model 312, and may calculate the degree of influence for each variable parameter by dividing the amount of change in the predicted state by the reference amount. The influence degree acquisition unit 324 may identify a rank of each variable parameter such that the rank is higher as the calculated degree of influence is greater. The influence degree acquisition unit 324 may supply the acquired rank of the degree of influence to the designation unit 325.

### (((Designation unit 325)))

The designation unit 325 designates a constant parameter to be adjusted, from among a plurality of constant parameters used in the prediction model 312. The designation unit 325 may sequentially designate each of the plurality of constant parameters as a constant parameter to be adjusted. The designation unit 325 may designate a constant parameter to be adjusted for each prediction model 312.

For example, the designation unit 325 may designate each of the plurality of constant parameters in descending order of the rank of the degree of influence of a variable parameter on which an arithmetic operation is performed with the constant parameter. For example, when the prediction model 312 is indicated by a mathematical expression Ka·Pa + Kb·Pb = V using constant parameters Ka, Kb, variable parameters Pa, Pb, and the value V of the predicted state, and when the degree of influence of the variable parameters is higher in an order of Pa and Pb, the designation unit 325 may designate the constant parameters in an order of Ka and Kb.

Each time the designation unit 325 designates a variable parameter to be adjusted, it may supply identification information (also referred to as a parameter ID) of the variable parameter to the determination unit 326. In the present embodiment, for example, the designation unit 325 may further supply the rank of the degree of influence of the designated variable parameter to the determination unit 326.

### (((Determination unit 326)))

The determination unit 326 determines a value of a constant parameter to be adjusted, such that an error between a state of a process predicted using the prediction model 312 and an actual state of the process is within a reference range. The error may be calculated between a state of a process predicted for one time point and an actual state of the process at the one time point. In other words, the actual state of the process used for calculation of the error may be a state of the process at the same time point as the predicted state of the process. The determination unit 326 may determine a value of a constant parameter corresponding to a parameter ID supplied from the designation unit 325.

The determination unit 326 may determine a value of a constant parameter to be adjusted, such that an error between an acquired state value acquired by the data acquisition unit 321 (that is, a state value indicating an actual state of a process) and a predicted state value predicted by the prediction unit 322 is within a reference range. The determination unit 326 may determine a value of a constant parameter to be adjusted, such that, when a predicted state value at a second time point (for example, a time point later than a first time point by a reference time) is predicted by the prediction model 312 from process data acquired at the first time point, an error between the predicted state value and an acquired state value at the second time point is within a reference range.

The determination unit 326 may adjust a value of a constant parameter to be adjusted, by a first reference width each time, until an error between an acquired state value and a predicted state value falls within a reference range. As a result, through one or more adjustments, the error between the acquired state value and the predicted state value is within the reference range.

It should be noted that the first reference width may be common regardless of the constant parameter, or may be different for each constant parameter. When the first reference width is different for each constant parameter, the first reference width may be set in accordance with a degree of influence of a variable parameter on which an arithmetic operation is performed with the constant parameter in the prediction model 312. For example, the first reference width may be set to be larger as the degree of influence of the variable parameter is higher, and the first reference width may be set to be smaller as the degree of influence is lower. Instead of this, the first reference width may be set to be smaller as the degree of influence of the variable parameter is higher, and the first reference width may be set to be larger as the degree of influence is lower.

The determination unit 326 may change, to a determined value, a value of a constant parameter to be adjusted in the prediction model 312 in the storage unit 31. In response to changing the value of the constant parameter to be adjusted, the determination unit 326 may supply, to the setting unit 327, a parameter **ID** of a variable parameter on which an arithmetic operation is performed with the constant parameter to be adjusted in the prediction model 312, and a rank of a degree of influence.

### (((Setting unit 327)))

The setting unit 327 sets a frequency of acquisition by the data acquisition unit 321 for a variable parameter of the prediction model 312 among parameters included in process data. The setting unit 327 may set a frequency of acquisition by the data acquisition unit 321 for a variable parameter having a higher rank of a degree of influence among a plurality of variable parameters, to be higher than a frequency of acquisition for a variable parameter having a lower rank of a degree of influence. The setting unit 327 may set a frequency of acquisition of a variable parameter corresponding to a parameter ID supplied from the determination unit 326, based on a rank of a degree of influence of the variable parameter. The setting unit 327 may set a frequency of acquisition of a variable parameter having a rank of a degree of influence higher than a reference rank, to be higher than a frequency of acquisition of a variable parameter having a rank of a degree of influence lower than the reference rank. The setting unit 327 may supply, to the data acquisition unit 321, the set frequency of acquisition and a parameter ID of a variable parameter to be acquired at the frequency of acquisition.

According to the control support apparatus 3 described above, a constant parameter to be adjusted is designated from among a plurality of constant parameters used in the prediction model 312 that predicts a state of a process, and a value of the constant parameter to be adjusted is determined such that an error in the predicted state of the process is within a reference range. Accordingly, the prediction model 312 having high prediction accuracy can be obtained.

In addition, a value of a constant parameter to be adjusted is determined such that an error between an acquired actual state value and a predicted state value is within a reference range. Accordingly, prediction accuracy of the prediction model 312 can be reliably improved.

In addition, a value of a constant parameter to be adjusted is adjusted by a first reference width each time until an error between an acquired state value and a predicted state value falls within a reference range. Accordingly, the error can be reliably made to be within the reference range.

In addition, each of the plurality of constant parameters is sequentially designated as a constant parameter to be adjusted. Accordingly, since values of the plurality of constant parameters are individually determined such that an error in a predicted process state is within a reference range, the prediction accuracy of the prediction model 312 can be reliably improved. In addition, unlike a case where the values of the plurality of constant parameters are collectively determined, an arithmetic operation load can be reduced.

In addition, for each of the plurality of variable parameters included in the prediction model 312, a rank of a degree of influence on the state of the process predicted by the prediction model 312 is acquired, and each of the plurality of constant parameters is designated in descending order of a rank of a degree of influence of a variable parameter on which an arithmetic operation is performed with the constant parameter. Accordingly, since a value of a constant parameter can be determined in descending order of the degree of influence on the predicted state of the process, the predicted state of the process can be gradually finely adjusted. Therefore, the prediction accuracy of the prediction model 312 can be reliably improved.

In addition, the state of the process is predicted by the prediction model 312 based on a value of a variable parameter included in acquired process data. Accordingly, the process can be appropriately controlled based on the predicted state of the process.

In addition, the variable parameter is either a measurement parameter or a control parameter. Accordingly, the state of the process can be predicted using either the measurement parameter or the control parameter.

In addition, the process is controlled based on a predetermined reference condition for a measurement parameter as a variable parameter in order to maintain the predicted state of the process within an allowable range. Accordingly, the process can be controlled so as to maintain the state of the process within the allowable range. Therefore, it is possible to prevent degradation of the state due to the state of the process being outside the allowable range.

**In** addition, for each of the plurality of variable parameters included in the prediction model 312, the rank of the degree of influence on the state of the process predicted by the prediction model 312 is acquired, and a frequency of acquisition for a variable parameter having a higher rank of the degree of influence among the plurality of variable parameters is set to be higher than a frequency of acquisition for a variable parameter having a lower rank of the degree of influence. Accordingly, since a frequency of acquisition of a variable parameter having a low degree of influence on the predicted state can be set to be relatively lower, it is possible to improve acquisition efficiency for of variable parameters while maintaining high prediction accuracy.

### (Operation)

### ((Control of process))

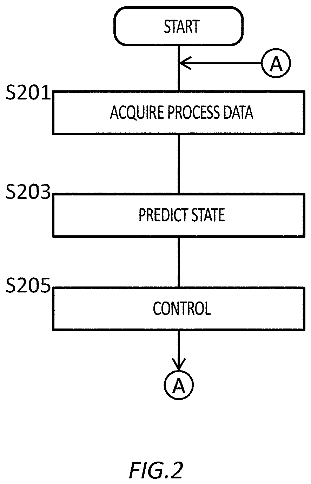

Fig. 2 shows operation of the control support apparatus 3. The control support apparatus 3 may control a process by using a predicted state by performing processing of steps S201 to S205. It should be noted that, at a starting time point of the operation in the present figure, the prediction model 312 may be stored in the storage unit 31 in advance.

**In** step S201, the data acquisition unit 321 acquires process data. The data acquisition unit 321 may acquire, from the sensor 21, a measurement parameter corresponding to a measured value in the process among the process data, and may acquire, from the control unit 323, a control parameter corresponding to a control value for the process.

Here, the processing of step S201 may be repeated at a reference cycle via step S205, which will be described later. The data acquisition unit 321 does not necessarily have to acquire a variable parameter of the prediction model 312 for each processing of step S201. When a frequency of acquisition is set by the setting unit 327 for a variable parameter of the prediction model 312, the data acquisition unit 321 may acquire the variable parameter at the set frequency of acquisition.

In step S203, the prediction unit 322 predicts a state of the process by each prediction model 312 based on a value of a variable parameter included in the acquired process data. The prediction unit 322 may regard, as the predicted state of the process, the predicted state output by supplying a variable parameter included in the process data to the prediction model 312. The predicted state may be indicated by a numerical value, that is, a predicted state value.

The prediction unit 322 may acquire the predicted state of the process by supplying a most recent values of the respective variable parameters to the prediction model 312. For example, when the prediction model 312 has variable parameters Pa, Pb, a value of the variable parameter Pa is acquired in an immediately preceding step S201, and a value of the variable parameter Pb is acquired in step S201 two times before, the prediction unit 322 may acquire the predicted state of the process by supplying these values to the prediction model 312 as a most recent values of the variable parameters Pa, Pb.

In step S205, the control unit 323 controls the process. The control unit 323 may control the process with a control content that is based on the predicted state. When the processing of step S205 is ended, the processing may proceed to step S201 described above.

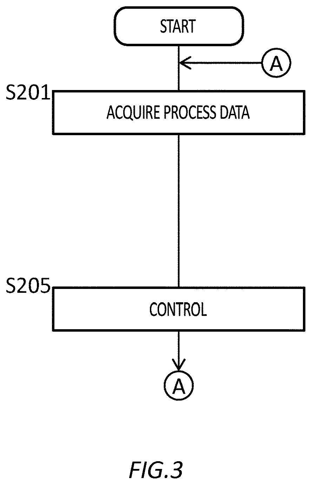

Fig. 3 shows another operation of the control support apparatus 3. The control support apparatus 3 may control the process by using an actual state by repeatedly performing the processing of steps S201 and S205 described above. It should be, however, noted that, in step S205 of the operation of the present figure, the control unit 323 may control the process with the control content that is based on the acquired state, and may control the process such that a measurement parameter as a variable parameter of the prediction model 312 satisfies a reference condition.

### ((Determination of constant parameter))

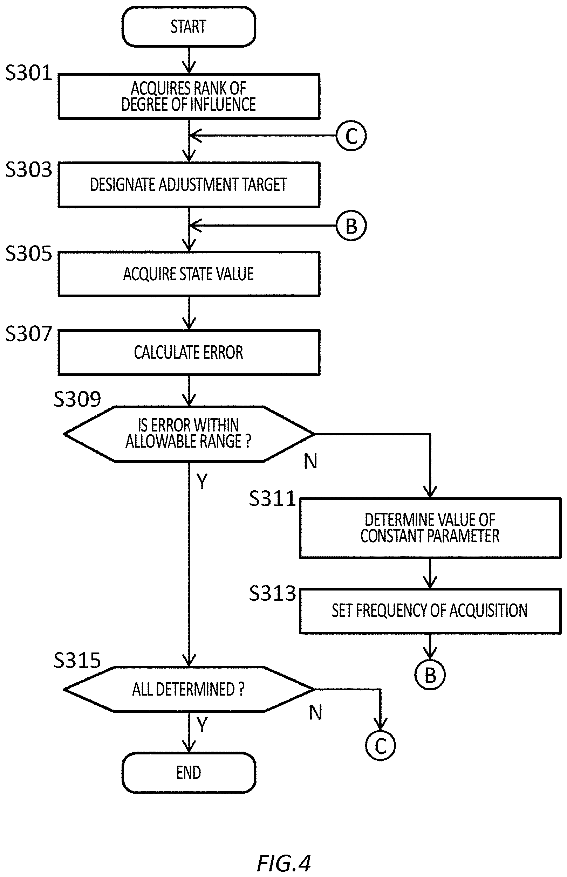

Fig. 4 shows another operation of the control support apparatus 3. The control support apparatus 3 may determine a value of each constant parameter of the prediction model 312 by performing processing of steps S301 to S315. The control support apparatus 3 may perform this operation for each prediction model 312. It should be noted that the operation of the present figure may be executed in parallel with the operations of FIG. 2 and FIG. 3 described above. The operation of the present figure may be started in response to a user operation, or may be started at each reference interval (for example, one month). At a starting time point of the operation of the present figure, the prediction model 312 may be stored in the storage unit 31 in advance, and a frequency of acquisition of each variable parameter may be preset for the data acquisition unit 321.

In step S301, the influence degree acquisition unit 324 acquires, for each of a plurality of variable parameters included in the prediction model 312, a rank of a degree of influence on a predicted state predicted by the prediction model 312. The influence degree acquisition unit 324 may calculate the degree of influence of each of the plurality of variable parameters, and may identify the rank based on the calculated degree of influence.

In step S303, the designation unit 325 designates, from among a plurality of constant parameters used in the prediction model 312, a constant parameter to be adjusted. Here, the processing of step S303 may be executed a plurality of times via step S315, which will be described later, and the designation unit 325 may designate different constant parameters among the plurality of constant parameters in each execution of step S303. In the present embodiment, for example, in each execution of step S303, the designation unit 325 may designate, among a plurality of constant parameters that have not yet been designated, a constant parameter on which an arithmetic operation is performed with a variable parameter having a highest rank of the degree of influence acquired in step S301. As a result, in each execution of step S303, each of the plurality of constant parameters is designated in descending order of a rank of a degree of influence of a variable parameter on which an arithmetic operation is performed with the constant parameter.

In step S305, the determination unit 326 acquires an acquired state value and a predicted state value. The determination unit 326 may acquire a value of the predicted state in the same manner as the processing of steps S201 to S203 described above. The determination unit 326 may acquire, via the data acquisition unit 321, the acquired state value indicating an actual state of a process. The determination unit 326 may acquire the acquired state value indicating the actual state of the process at a time point at which the predicted state is indicated by the predicted state value, and for example, it may acquire the acquired state value indicating the actual state at a time point later than, by a reference time, a time point at which process data for acquiring the predicted state value are acquired. It should be noted that the processing of step S305 may be repeated via steps S313 and S315, which will be described later. In this case, the processing of step S305 may be performed at each reference time.

In step S307, the determination unit 326 calculates an error between the acquired state value and the predicted state value. For example, the determination unit 326 may calculate an absolute value of a difference between the acquired state value and the predicted state value.

The determination unit 326 may calculate the error between the predicted state value and the acquired state value for one time point. When the processing of step S305 is performed for a second time or later at reference time intervals, the determination unit 326 may calculate an error between an acquired state value acquired in a most recent step S305 and a predicted state acquired in one previous step S305.

In step S309, the determination unit 326 determines whether or not the calculated error is within an allowable range. If it is determined that the error is within the allowable range (step S309; Yes), the processing may proceed to step S315. If it is determined that the error is outside the allowable range (step S309; No), the processing may proceed to step S311.

In step S311, the determination unit 326 determines a value of the constant parameter to be adjusted, to be a value obtained by adjusting a current value by a first reference width. The determination unit 326 may increase, by the first reference width from the current value, a value of a constant parameter on which an arithmetic operation is performed with a variable parameter having a rank of a degree of influence higher than a reference rank, and may decrease, by the first reference width from the current value, a value of a constant parameter on which an arithmetic operation is performed with a variable parameter having a rank of a degree of influence lower than the reference rank. The reference rank may be an intermediate rank between a highest rank and a lowest rank, or may be a preset rank (for example, third) or the like.

Here, the processing of step S311 may be executed a plurality of times via step S313, which will be described later. As a result, the determination unit 326 may adjust, by a plurality of executions of step S311, a value of one constant parameter to be adjusted, by the first reference width each time.

In step S313, the setting unit 327 sets a frequency of acquisition by the data acquisition unit 321 for a variable parameter on which an arithmetic operation is performed with the constant parameter to be adjusted, among respective parameters included in the process data. As a result, each time the constant parameter to be adjusted is adjusted in step S311, a frequency of acquisition by the data acquisition unit 321 for the variable parameter on which an arithmetic operation is performed with the constant parameter among the plurality of variable parameters, is reset.

The setting unit 327 may determine a frequency of acquisition of a variable parameter on which an arithmetic operation is performed with the adjustment target parameter, to be a value obtained by adjusting the current value by a second reference width. The setting unit 327 may acquire, from the influence degree acquisition unit 324, a degree of influence of a variable parameter on which an arithmetic operation is performed with the adjustment target parameter in the prediction model 312 after determination of a value of the adjustment target parameter in step S311, and may adjust a frequency of acquisition of the variable parameter based on the acquired degree of influence. For example, the setting unit 327 may increase, by the second reference width from the current value, a frequency of acquisition of a variable parameter having a degree of influence higher than a reference value, and may decrease, by the second reference width from the current value, a frequency of acquisition of a variable parameter having a degree of influence lower than the reference value. As a result, a frequency of acquisition by the data acquisition unit 321 for a variable parameter having a degree of influence higher than the reference value among the plurality of variable parameters is set to be higher than a frequency of acquisition for a variable parameter having a degree of influence lower than the reference value. Accordingly, a frequency of acquisition of a variable parameter having a degree of influence higher than the reference value and having a higher rank of a degree of influence is set to be lower than a frequency of acquisition of a variable parameter having a degree of influence lower than the reference value and having a lower rank of a degree of influence. The reference value may be set to an arbitrary value in advance.

When the processing of step S313 is ended, the processing may proceed to step S305 described above. Thereafter, as a result of the processing of steps S305 to S311 being repeated, the value of the constant parameter to be adjusted is determined such that an error between the predicted state of the process predicted using the prediction model 312 and the actual state of the process is within a reference range.

In step S315, the determination unit 326 determines whether or not all the constant parameters in the prediction model 312 have been designated as constant parameters to be adjusted. If it is determined that not all the constant parameters have been designated (step S315; No), the processing may proceed to step S303 described above. **In** this case, the determination unit 326 may narrow the allowable range of the error between the acquired state value and the predicted state value, which is used in step S309, compared to a current range. If it is determined that all the constant parameters have been designated (step S315; Yes), the operation may end.

According to the operation described above, each time the constant parameter to be adjusted is adjusted, a frequency of acquisition for the variable parameter on which an arithmetic operation is performed with the constant parameter, is reset. Accordingly, when adjustment of a constant parameter changes a degree of influence of a variable parameter on which an arithmetic operation is performed with the constant parameter, the frequency of acquisition can be set in accordance with the degree of influence after the change.

### (Modification example)

It should be noted that, in the above embodiment, the processor 32 has been described as realizing the data acquisition unit 321, the prediction unit 322, the control unit 323, the influence degree acquisition unit 324, and the setting unit 327, but it does not have to realize any of these. When the processor 32 does not realize the data acquisition unit 321 and the prediction unit 322, the control support apparatus 3 may include an output unit that outputs, to an external apparatus, the prediction model 312 for which a value of a constant parameter has been determined. When the processor 32 does not realize the control unit 323, the control support apparatus 3 may include an output unit that outputs, to the outside, a predicted state predicted by the prediction unit 322. When the processor 32 does not include the influence degree acquisition unit 324, the designation unit 325 may designate a constant parameter to be adjusted regardless of a degree of influence of a variable parameter, such as designating a constant parameter to be adjusted sequentially from a head side of a mathematical expression model as the prediction model 312, and the setting unit 327 may set a frequency of acquisition regardless of a degree of influence of a variable parameter, such as setting a frequency of acquisition in response to a user operation. When the processor 32 does not realize the setting unit 327, the control support apparatus 3 does not have to set a frequency of acquisition for each variable parameter.

In addition, the influence degree acquisition unit 324 has been described as calculating a degree of influence of each variable parameter on a predicted state and acquiring a rank of a degree of influence, but it may read out and acquire a degree of influence stored in the storage unit 31 in advance, or may read out and acquire a rank of the degree of influence. In this case, the rank of the degree of influence may be identified from a structure of the mathematical expression model as the prediction model 312. For example, when the prediction model 312 includes the variable parameter Pa multiplied by a constant parameter as a proportionality coefficient and the variable parameter Pb as an exponent for raising the constant parameter to a power, the variable parameter Pb has a greater degree of influence on the predicted state than the variable parameter Pa, and thus the rank of the degree of influence may be set to be high.

In addition, the setting unit 327 has been described as resetting, each time a value of the constant parameter to be adjusted is adjusted, a frequency of acquisition of a variable parameter on which an arithmetic operation is performed with the constant parameter, but when the value of the constant parameter is adjusted at least a reference number of times, the frequency of acquisition may be set to a predetermined upper-limit frequency or lower-limit frequency, or may be set to a frequency input from a user.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations designated in the flowcharts or block diagrams. Examples of the computer-readable medium may include an electronic storage medium, a magnetic storage medium, an optical storage medium, an electromagnetic storage medium, a semiconductor storage medium, or the like. More specific examples of the computer-readable medium may include a FLOPPY (registered trademark) disk, a diskette, a hard disk, a random access memory (RAM), a read only memory (ROM), an erasable programmable read only memory (EPROM or a flash memory), an electrically erasable programmable read only memory (EEPROM), a static random access memory (SRAM), a compact disc read only memory (CD-ROM), a digital versatile disk (DVD), a BLU-RAY (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as SMALLTALK (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations designated in the flowcharts or block diagrams. Here, the computer may be a personal computer (PC), a tablet-type computer, a smartphone, a workstation, a server computer, a general-purpose computer, a special-purpose computer, or the like, or may be a computer system in which a plurality of computers are connected to each other. Such computer system in which the plurality of computers are connected to each other is also called a distributed computing system, and is a computer in a broad sense. In the distributed computing system, the plurality of computers collectively execute the program by each of the plurality of computers executing a part of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multiprocessor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multiprocessor-aware programming.

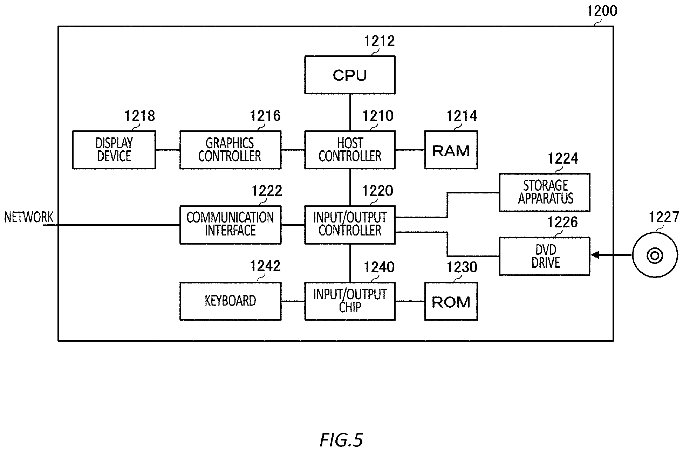

Fig. 5 shows an example of a computer 1200 in which a plurality of aspects of the present invention may be entirely or partially embodied. A program that is installed in the computer 1200 may cause the computer 1200 to function as operations associated with an apparatus according to the embodiment of the present invention or one or more sections in the apparatus, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute certain operations associated with some or all of the blocks of flowcharts and block diagrams described herein.

The computer 1200 according to the present embodiment includes the CPU 1212, a RAM 1214, a graphics controller 1216, and a display device 1218, which are mutually connected by a host controller 1210. The computer 1200 also includes a communication interface 1222, a storage apparatus 1224 such as a hard disk drive, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on the display device 1218.

The communication interface 1222 communicates with other electronic devices via a network. The storage apparatus 1224 stores a program and data used by the CPU 1212 in the computer 1200. The DVD-ROM drive 1226 reads programs or data from a DVD-ROM 1227 and provides the programs or data to the storage apparatus 1224 via the RAM 1214. The IC card drive reads the programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer-readable medium such as the DVD-ROM 1227 or the IC card. The programs are read from the computer-readable medium, are installed in the storage apparatus 1224, the RAM 1214, or the ROM 1230, which are also an example of the computer-readable medium, and are executed by the CPU 1212. Information processing written in these programs is read by the computer 1200, and provides cooperation between the programs and the various types of hardware resources described above. A apparatus or a method may be configured by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing written in the communication program. The communication interface 1222, under the control of the CPU 1212, reads transmission data stored in a transmission buffering region provided in a recording medium such as the RAM 1214, the storage apparatus 1224, the DVD-ROM 1227, or the IC card, transmits the read transmission data to the network, or writes reception data received from the network to a reception buffering region or the like provided on the recording medium.

In addition, the CPU 1212 may cause all or a necessary portion of a file or a database stored in an external recording medium such as the storage apparatus 1224, the DVD-ROM drive 1226 (the DVD-ROM 1227), an IC card, or the like to be read into the RAM 1214, and execute various types of processing on data on the RAM 1214. The CPU 1212 then writes back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout the present disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search, from among the plurality of entries, for an entry with the attribute value of the first attribute designated that meets a condition, read the attribute value of the second attribute stored in this entry, and thereby acquiring the attribute value of the second attribute associated with the first attribute satisfying a predetermined condition.

The program or software module described above may be stored in the computer-readable medium on the computer 1200 or near the computer 1200. In addition, a recording medium such as a hard disk or a RAM provided in a server system connected to a dedicated communication network or the Internet can be used as the computer-readable medium, thereby providing the program to the computer 1200 via the network.

While the present invention has been described above using the embodiments, the technical scope of the present invention is not limited to a scope described in the above embodiments. It is apparent to persons skilled in the art that various alterations or improvements can be added to the above embodiments. It is also apparent from description of the claims that the embodiments added with such alterations or improvements can be included in the technical scope of the present invention.

It should be noted that an execution order of respective processings such as operations, procedures, steps, and stages in an apparatus, a system, a program, and a method shown in the claims, the specification, and the drawings is not expressly stated as "before", "prior to", or the like in particular, and, unless an output of a previous processing is used in a subsequent processing, may be realized in any order. Even if the operational flow is described using "first", "next" or the like, in the claims, specification, and drawings, this does not mean that the process must be performed in this order.

### EXPLANATION OF REFERENCES

1: system
2: equipment
3: control support apparatus
20: instrument
21: sensor
31: storage unit
32: processor
311: program
312: prediction model
321: data acquisition unit
322: prediction unit
323: control unit
324: influence degree acquisition unit
325: designation unit
326: determination unit
327: setting unit
1200: computer
1210: host controller
1212: CPU
1214: RAM
1216: graphics controller
1218: display device
1220: input/output controller
1222: communication interface
1224: storage apparatus
1226: DVD-ROM drive
1227: DVD-ROM
1230: ROM
1240: input/output chip
1242: keyboard.

## Claims

1. An apparatus comprising a processor, the processor performing:
designating a constant parameter to be adjusted, from among a plurality of constant parameters used in a prediction model which predicts a state of a process in response to input of process data; and
determining a value of the constant parameter to be adjusted, such that an error between the state of the process predicted using the prediction model and an actual state of the process is within a reference range.

2. The apparatus according to claim 1, wherein in the designating, each of the plurality of constant parameters is sequentially designated as the constant parameter to be adjusted.

3. The apparatus according to claim 2, wherein
the prediction model includes a plurality of variable parameters,
the processor further performs first acquiring, for each of the plurality of variable parameters included in the prediction model, a rank of a degree of influence on the state of the process predicted by the prediction model, and
in the designating, each of the plurality of constant parameters is designated in descending order of the rank of the degree of influence of a variable parameter on which an arithmetic operation is performed with the constant parameter.

4. The apparatus according to any one of claims 1 to 3, wherein
the prediction model includes a variable parameter, and
the processor further performs:
second acquiring process data; and
predicting a state of a process by the prediction model based on a value of a variable parameter included in acquired process data.

5. The apparatus according to claim 4, wherein
the prediction model includes a plurality of variable parameters, and
the processor further performs:
first acquiring, for each of the plurality of variable parameters included in the prediction model, a rank of a degree of influence on the state of the process predicted by the prediction model; and
setting a frequency of acquisition by the second acquiring for a variable parameter having a higher rank of a degree of influence among the plurality of variable parameters, to be higher than a frequency of acquisition by the second acquiring for a variable parameter having a lower rank of a degree of influence.

6. The apparatus according to claim 4 or 5, wherein
in the second acquiring, a state value indicating an actual state for the state of the process predicted by the predicting is further acquired, and
in the determining, a value of the constant parameter to be adjusted is determined such that an error between the state value acquired by the second acquiring and a state value indicating the state of the process predicted by the predicting is within a reference range.

7. The apparatus according to claim 6, wherein
in the determining, the value of the constant parameter to be adjusted is adjusted by a reference width each time until the error between the state value acquired by the second acquiring and the state value indicating the state of the process predicted by the predicting falls within the reference range.

8. The apparatus according to claim 7, wherein
the prediction model includes a plurality of variable parameters, and
the processor further performs setting by resetting, each time the constant parameter to be adjusted is adjusted, a frequency of acquisition by the second acquiring for a variable parameter on which an arithmetic operation is performed with the constant parameter among the plurality of variable parameters.

9. The apparatus according to any one of claims 4 to 8, wherein
the variable parameter is either a measurement parameter corresponding to a measured value in a process or a control parameter corresponding to a control value for a process.

10. The apparatus according to claim 9, wherein
the processor further performs controlling a process based on a predetermined reference condition for a measurement parameter as the variable parameter in order to maintain the state of the process predicted using the prediction model within an allowable range.

11. A method comprising:
designating a constant parameter to be adjusted, from among a plurality of constant parameters used in a prediction model which predicts a state of a process in response to input of process data; and
determining a value of the constant parameter to be adjusted, such that an error between the state of the process predicted using the prediction model and an actual state of the process is within a reference range.

12. A program that, when executed by a computer, causes the computer to perform operations comprising:
designating a constant parameter to be adjusted, from among a plurality of constant parameters used in a prediction model which predicts a state of a process in response to input of process data; and
determining a value of the constant parameter to be adjusted, such that an error between the state of the process predicted using the prediction model and an actual state of the process is within a reference range.
